# EUROPÄISCHE PATENTSCHRIFT

(11) **EP 4 147 560 B1**
(45) Veröffentlichungstag und Bekanntmachung des Hinweises auf die Patenterteilung: **05.08.2026**
(21) Anmeldenummer: 22180945.2
(22) Anmeldetag: 24.06.2022
(51) Int. Cl.: A01D 41/127

(54) **MESSVORRICHTUNG FÜR EINEN DURCH EINE ERNTEMASCHINE GEFÖRDERTEN MATERIALSTROM**
MEASURING DEVICE FOR A FLOW OF MATERIAL CONVEYED BY A HARVESTING MACHINE
DISPOSITIF DE MESURE POUR UN ÉCOULEMENT DE MATIÈRE TRANSPORTÉ PAR UN ENGIN DE RECOLTE

(30) Priorität: 14.09.2021 DE 102021123700
(43) Veröffentlichungstag der Anmeldung: 15.03.2023
(73) Patentinhaber: CLAAS E-Systems GmbH, 49201 Dissen (DE)
(72) Erfinder: Johann to Büren, Gerald, 49205 Hasbergen (DE)
(74) Vertreter: CLAAS Gruppe

(56) Entgegenhaltungen:
- EP-A1- 1 570 723
- EP-A1- 3 366 106
- EP-B1- 2 586 285
- US-A1- 2006 027 750

## Beschreibung

Die vorliegende Erfindung betrifft eine landwirtschaftliche Erntemaschine mit einer Messvorrichtung zur Untersuchung eines durch die Erntemaschine geförderten Materialstromes und eine entsprechende Messvorrichtung.

Landwirtschaftliche Erntemaschinen fördern und verarbeiten Erntegut, wobei das geförderte Erntegut in der Erntemaschine einen geförderten Erntegutstrom ausbildet. Hierbei ist es von Interesse, dass das durch die Erntemaschine geförderte Erntegut im laufenden Erntebetrieb auf dessen Eigenschaften zu untersuchen.

Gemäß der EP 2 586 285 B1 lässt sich die Untersuchung eines Erntegutstroms beispielsweise mittels einer auf Basis der Nahinfrarot-Spektroskopie arbeitenden Messvorrichtung durchführen. Außerdem weisen bekannte Messvorrichtungen dazu eine am Erntegutstrom angeordnete optische Erfassungsvorrichtung auf, die vom Erntegut, welches mit einer Lichtquelle bestrahlt wird, reflektiertes Licht erfasst. Eine damit signalverbundene Auswertevorrichtung mit einem Strahlendetektor analysiert das Spektrum des erfassten Lichtes, um daraus Eigenschaften des Ernteguts abzuleiten. Die US 2006/027750 A1 offenbart eine Messvorrichtung mit zwei Betriebsmodi, wobei der zweite Betriebsmodus nur der Reinigung der Messvorrichtung dient.

Neben der Untersuchung eines Erntegutstroms der Erntemaschine ist auch die Untersuchung von Betriebsflüssigkeiten der landwirtschaftlichen Erntemaschine relevant, erfordert jedoch eine weitere separate Messvorrichtung, die räumlich und kostentechnisch nachteilig ist. Durch die Ermittlung der Eigenschaften von Betriebsflüssigkeiten der Erntemaschine kann beispielsweise die Betriebsart der Erntemaschine optimiert werden und/oder eine rechtzeitige Instandhaltung der Erntemaschine durchgeführt werden. Insbesondere die Verwendung mehrerer Messvorrichtungen, die jeweils einen NIR-Sensor umfassen, führt zu einem kostentechnischen Nachteil.

Der vorliegenden Erfindung liegt die Aufgabe zugrunde, eine verbesserte oder zumindest eine alternative Ausführungsform einer landwirtschaftlichen Erntemaschine und/oder einer Messvorrichtung anzugeben, wobei insbesondere eine Verringerung der Herstellungskosten erzielt wird.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, dass eine Messvorrichtung zur Erfassung eines vom einem geförderten Erntegutstroms reflektierten Lichtes als auch zur Erfassung eines vom einem geförderten Betriebsflüssigkeitsstrom reflektierten Lichtes nutzbar ist. Hierdurch kann die Anzahl der Messvorrichtungen reduziert werden, sodass die Herstellungskosten reduziert werden. Dies führt dazu, dass in landwirtschaftlichen Erntemaschinen neben der Erfassung von Eigenschaften des Ernteguts und auch Eigenschaften der Betriebsflüssigkeit erfasst werden, sodass eine Optimierung des Betriebes der landwirtschaftlichen Erntemaschine erzielbar ist.

Die erfindungsgemäße landwirtschaftliche Erntemaschine weist eine, insbesondere lediglich eine, Messvorrichtung zur Untersuchung eines durch die Erntemaschine geförderten Materialstromes auf. Unter einem Materialstrom kann ein Erntegutstrom und/oder ein Betriebsflüssigkeitsstrom verstanden werden. Unter einem Erntegutstrom wird ein durch einen Förderkanal der Erntemaschine transportiertes und mittels der Erntemaschine abgeerntetes Erntegut verstanden. Während in der Erntemaschine abgeerntetes und gefördertes Erntegut einen geförderten Erntegutstrom ausbildet, bildet eine in der Erntemaschine geförderte Betriebsflüssigkeit einen geförderten Betriebsflüssigkeitsstrom aus. Die Betriebsflüssigkeit wird für den Betrieb der Erntemaschine benötigt.

Die landwirtschaftliche Erntemaschine und/oder die Messvorrichtung können wenigstens eine Lichtquelle aufweisen. Diese Lichtquelle kann den geförderten Materialstrom mit Licht, insbesondere mit breitbandigem bzw. weißem Licht, beaufschlagen. Die Messvorrichtung weist eine optische Erfassungsvorrichtung auf, die zur Erfassung eines vom geförderten Materialstrom reflektierten Lichtes ausgebildet ist. Eine mit der Messvorrichtung signalverbundene Auswertevorrichtung kann ein Spektrum des erfassten Lichtes analysieren, um daraus Eigenschaften des geförderten Materialstroms abzuleiten.

Die Messeinrichtung weist einen ersten Betriebsmodus auf, in dem die optische Erfassungsvorrichtung Licht erfasst, welches von einem durch die Erntemaschine geförderten Erntegutstroms reflektiert wurde. In diesem ersten Betriebsmodus lassen sich die Eigenschaften des geförderten Erntegutstroms ableiten.

Die Messeinrichtung weist einen zweiten Betriebsmodus auf, in dem die optische Erfassungsvorrichtung Licht erfasst, welches von einem durch die Erntemaschine geförderten Betriebsflüssigkeitsstrom reflektiert wurde. In diesem zweiten Betriebsmodus lassen sich die Eigenschaften des geförderten Betriebsflüssigkeitsstroms ableiten.

Bei einer vorteilhaften Weiterbildung der erfindungsgemäßen Lösung ist vorgesehen, dass die Messvorrichtung wenigstens ein verstellbares Bauteil aufweist. Dieses verstellbare Bauteil ist zwischen einer ersten Stellung bzw. ersten Position und einer zweiten Stellung bzw. zweiten Position verstellbar bzw. verschiebbar. Mit anderen Worten ausgedrückt, kann das verstellbare Bauteil relativ zum optische Erfassungsvorrichtung in der ersten Stellung und in der zur ersten Stellung beabstandeten zweite Stellung positioniert werden. Das verstellbare Bauteil kann auch in einer Stellung zwischen der ersten Stellung und der zweiten Stellung positioniert werden. Bei einer Verstellung des verstellbaren Bauteils von der ersten Stellung in die zweite Stellung oder umgekehrt, kann das verstellbare Bauteil positionsmä-ßig verschoben und/oder gedreht werden.

Das verstellbare Bauteil ist im ersten Betriebsmodus der Messvorrichtung in der ersten Stellung angeordnet, sodass die optische Erfassungsvorrichtung vom geförderten Erntegutstrom reflektiertes Licht erfasst, während das verstellbare Bauteil im zweiten Betriebsmodus der Messvorrichtung in der zweiten Stellung angeordnet ist, sodass die optische Erfassungsvorrichtung vom geförderten Betriebsflüssigkeitsstrom reflektiertes Licht erfasst.

In der ersten Stellung kann das verstellbare Bauteil so angeordnet sein, dass das Licht der Lichtquelle im Wesentlichen, insbesondere lediglich, den geförderten Erntegutstrom beaufschlägt. In der zweiten Stellung kann das verstellbare Bauteil so angeordnet sein, dass das Licht der Lichtquelle zusätzlich den geförderten Betriebsflüssigkeitsstrom beaufschlägt. Es kann vorgesehen sein, dass in der zweiten Stellung des verstellbaren Bauteils das Licht der Lichtquelle im Wesentlichen, insbesondere lediglich, den geförderten Betriebsflüssigkeitsstrom beaufschlägt.

Bei einer vorteilhaften Weiterbildung der erfindungsgemäßen Lösung ist vorgesehen, dass die Messvorrichtung wenigstens einen Leitungsabschnitt aufweist, wobei der Leitungsabschnitt vom geförderten Betriebsflüssigkeitsstrom durchströmt wird, wobei der Leitungsabschnitt optisch transparent ausgebildet ist.

Ein optisch transparenter Leitungsabschnitt lässt im Wesentlichen Licht der Lichtquelle und im Wesentlichen reflektiertes Licht, insbesondere vom geförderten Betriebsflüssigkeitsstrom reflektiertes Licht, hindurch. Mit anderen Worten ausgedrückt, lässt der optisch transparente Leitungsabschnitt eine Transmission des Lichtes der Lichtquelle und des reflektierten Lichtes zu.

Der Leitungsabschnitt kann einen Leitungskörper aus optisch transparenten Material aufweisen, wobei im Leitungskörper ein Durchströmkanal für den geförderten Betriebsflüssigkeitsstrom ausgebildet ist. Hierbei kann vorgesehen sein, dass der geförderte Betriebsflüssigkeitsstrom durch eine Einlassöffnung des Leitungskörpers in den Durchströmkanal des Leitungskörpers einströmen kann, dann den Durchströmkanal des Leitungskörpers durchströmt und durch eine Auslassöffnung des Leitungskörpers aus dem Durchströmkanal und dem Leitungskörper ausströmt. Die Einlassöffnung kann mit einer Einlassleitung für den geförderten Betriebsflüssigkeitsstrom fluiddicht verbunden werden. Die Auslassöffnung kann mit einer Auslassleitung für den geförderten Betriebsflüssigkeitsstrom fluiddicht verbunden werden. Die Einlassleitung und/oder die Auslassleitung können im Vergleich zum Leitungskörper flexibler ausgebildet sein.

Der Leitungskörper kann quaderförmig ausgebildet sein. Es kann vorgesehen sein, dass die Einlassöffnung und die Auslassöffnung bei einem quaderförmig ausgebildeten Leitungskörper auf der gleichen Seitenfläche, insbesondere der gleichen rechteckigen Seitenflächen, angeordnet sind. Es kann vorgesehen sein, dass der Durchströmkanal einen im Wesentlichen U-förmigen Verlauf, insbesondere einen U-förmigen Verlauf, aufweist. Ein U-förmiger Verlauf hat beispielsweise den Vorteil, dass bei einer bezüglich der Strömungsrichtung des Betriebsflüssigkeitsstroms konstanten Querschnittsfläche des Durchströmkanals der geförderte Betriebsflüssigkeitsstrom eine längere Zeit mit dem Licht der Lichtquelle beaufschlagt wird. Somit kann auch die Menge des durch den geförderten Betriebsflüssigkeitsstrom reflektierten Lichtes ohne eine Änderung der Querschnittsfläche des Durchströmkanal erzielt werden.

Bei einer vorteilhaften Weiterbildung der erfindungsgemäßen Lösung ist vorgesehen, dass dass der Leitungsabschnitt das verstellbare Bauteil ausbildet oder dass eine Spiegeleinheit das verstellbare Bauteil ausbildet.

Wenn der Leitungsabschnitt das verstellbare Bauteil ausbildet, kann der Leitungsabschnitt im ersten Betriebsmodus der Messvorrichtung in der ersten Stellung angeordnet werden, sodass die optische Erfassungsvorrichtung vom geförderten Erntegutstrom reflektiertes Licht erfasst, während der Leitungsabschnitt im zweiten Betriebsmodus der Messvorrichtung in der zweiten Stellung angeordnet ist, sodass die optische Erfassungsvorrichtung vom geförderten Betriebsflüssigkeitsstrom reflektiertes Licht erfasst.

Die Spiegeleinheit kann einen Spiegel aufweisen, der eine Spiegelung des Lichtes der Lichtquelle und des reflektierten Lichtes, insbesondere des vom geförderten Betriebsflüssigkeitsstrom reflektierten Lichtes, ermöglicht. Die Spiegeleinheit kann so ausgebildet sein, dass der Spiegel bezüglich der Erfassungsvorrichtung verschiebbar und/oder drehbar ist. Wenn der Spiegeleinheit das verstellbare Bauteil ausbildet, kann die Spiegeleinheit, insbesondere der Spiegel, im ersten Betriebsmodus der Messvorrichtung in der ersten Stellung angeordnet werden, sodass die optische Erfassungsvorrichtung vom geförderten Erntegutstrom reflektiertes Licht erfasst, während die Spiegeleinheit, insbesondere der Spiegel, im zweiten Betriebsmodus der Messvorrichtung in der zweiten Stellung angeordnet ist, sodass die optische Erfassungsvorrichtung vom geförderten Betriebsflüssigkeitsstrom reflektiertes Licht erfasst. In dieser zweiten Stellung des kann das Lichtes der Lichtquelle so umgelenkt werden, dass das Licht der Lichtquelle lediglich den geförderten Betriebsflüssigkeitsstrom erreicht. Auch wird lediglich vom geförderten Betriebsflüssigkeitsstrom reflektierten Lichtes mittels der Spiegeleinheit in der zweiten Stellung zur optischen Erfassungsvorrichtung geführt.

Bei einer vorteilhaften Weiterbildung der erfindungsgemäßen Lösung ist vorgesehen, dass die Erntemaschine einen Förderkanal zur Förderung des Erntegutstromes aufweist. Mit anderen Worten ausgedrückt, durchströmt das Erntegut des Erntegutstromes den Förderkanal. Insbesondere strömt das Erntegut des Erntegutstromes entlang einer Strömungsrichtung. Der Förderkanal weist wenigstens eine Wandungsöffnung auf, in der eine optisch transparente Trennplatte angeordnet ist. Diese Trennplatte kann so auf die Wandungsöffnung angepasst ausgebildet sein, dass kein Erntegut des Erntegutstromes durch die Wandungsöffnung aus dem Förderkanal strömen kann.

Eine optisch transparente Trennplatte lässt im Wesentlichen Licht der Lichtquelle und im Wesentlichen reflektiertes Licht, insbesondere vom geförderten Erntegutstrom reflektiertes Licht, hindurch. Mit anderen Worten ausgedrückt, lässt der optisch transparente Trennplatte eine Transmission des Lichtes der Lichtquelle und des reflektierten Lichtes zu.

Die optische Erfassungsvorrichtung ist von der Trennplatte beabstandet angeordnet, wobei das verstellbare Bauteil in der zweiten Stellung wenigstens teilweise, insbesondere vollständig, zwischen der optischen Erfassungsvorrichtung und der Trennplatte angeordnet ist. Hierdurch wird bewirkt, dass der geförderte Betriebsflüssigkeitsstrom vom Licht der Lichtquelle bestrahlt wird, und von dem geförderten Betriebsflüssigkeitsstrom reflektiertes Licht durch die optische Erfassungsvorrichtung erfasst wird.

Die optische Erfassungsvorrichtung kann bezüglich einer Querrichtung von der Trennplatte beabstandet angeordnet sein, wobei das verstellbare Bauteil bezüglich einer Verschieberichtung verschiebbar ausgebildet sein kann, wobei die Verschieberichtung quer und/oder senkrecht zur Querrichtung ausgerichtet ist, während die Verschieberichtung parallel zur Strömungsrichtung des Erntegutstromes ausgerichtet ist. Das verstellbare Bauteil kann bezüglich der Querrichtung von der optischen Erfassungsvorrichtung und von dem Förderkanal, insbesondere von der optisch transparenten Trennplatte, angeordnet sein.

Bei einer vorteilhaften Weiterbildung der erfindungsgemäßen Lösung ist vorgesehen, dass ein Schmiermittel, insbesondere Öl, den Betriebsflüssigkeitsstrom der landwirtschaftlichen Erntemaschine ausbildet. Hierdurch kann gefördertes Schmiermittel, insbesondere Öl, mit Licht, insbesondere mit breitbandigem bzw. weißem Licht, beaufschlagt werden. Die optische Erfassungsvorrichtung kann im zweiten Betriebsmodus der Messvorrichtung ein vom geförderten Schmiermittel, insbesondere Öl, reflektiertes Licht erfassen. Eine mit der Messvorrichtung signalverbundene Auswertevorrichtung kann ein Spektrum des erfassten Lichtes analysieren, um daraus Eigenschaften, insbesondere die Zusammensetzung, des geförderten Schmiermittels, insbesondere Öls, abzuleiten.

Bei einer vorteilhaften Weiterbildung der erfindungsgemäßen Lösung ist vorgesehen, dass die optische Erfassungsvorrichtung einen, insbesondere lediglich einen, NIR-Sensor aufweist. Ein NIR-Sensor ist ein auf Basis der Nahinfrarotspektroskopie arbeitender Sensor. Der NIR-Sensor kann wellenlängenaufgelöst die Intensität des von den vorbeiströmenden Partikeln des Erntegutstroms reflektierten Lichts und/oder von den vorbeiströmenden Partikeln des Betriebsflüssigkeitsstroms reflektierten Lichts erfassen.

Bei einer vorteilhaften Weiterbildung der erfindungsgemäßen Lösung ist vorgesehen, dass die Erntemaschine ein Mähdrescher, ein Feldhäcksler und/oder eine Ballenpresse ist. Die Erntemaschine kann insbesondere ein selbstfahrender Mähdrescher oder ein selbstfahrender Feldhäcksler sein.

Ferner betrifft die Erfindung eine Messvorrichtung für die oben beschriebene landwirtschaftliche Erntemaschine. Der obere Beschreibungsteil, der die Messvorrichtung beschreibt, beschreibt wenigstens teilweise, insbesondere vollständig, auch diese Messvorrichtung. Die Messvorrichtung ist zur Untersuchung eines durch die Erntemaschine geförderten Materialstromes ausgebildet ist. Die Messvorrichtung weist eine optische Erfassungsvorrichtung auf, die zur Erfassung eines vom geförderten Materialstrom reflektierten Lichtes ausgebildet ist. Ferner weist die Messeinrichtung einen ersten Betriebsmodus auf, in dem die optische Erfassungsvorrichtung Licht erfassen kann, welches von einem durch die Erntemaschine geförderten Erntegutstroms reflektiert wurde. Außerdem weist die Messeinrichtung einen zweiten Betriebsmodus auf, in dem die optische Erfassungsvorrichtung Licht erfassen kann, welches von einem durch die Erntemaschine geförderten Betriebsflüssigkeitsstrom reflektiert wurde.

Bei einer vorteilhaften Weiterbildung der erfindungsgemäßen Lösung ist vorgesehen, dass die Messvorrichtung wenigstens ein verstellbares Bauteil aufweist, wobei das verstellbare Bauteil zwischen einer ersten Stellung und einer zweiten Stellung verstellbar ist. Das verstellbare Bauteil ist im ersten Betriebsmodus der Messvorrichtung in der ersten Stellung angeordnet, sodass die optische Erfassungsvorrichtung vom geförderten Erntegutstrom reflektiertes Licht erfassen kann, wobei das verstellbare Bauteil im zweiten Betriebsmodus der Messvorrichtung in der zweiten Stellung angeordnet ist, sodass die optische Erfassungsvorrichtung vom geförderten Betriebsflüssigkeitsstrom reflektiertes Licht erfassen kann.

Bei einer vorteilhaften Weiterbildung der erfindungsgemäßen Lösung ist vorgesehen, dass das verstellbare Bauteil einen optisch transparenten Leitungsabschnitt für die landwirtschaftliche Erntemaschine ausbildet, wobei ein Betriebsflüssigkeitsstrom der landwirtschaftlichen Erntemaschine durch den Leitungsabschnitt förderbar ist.

Bei einer vorteilhaften Weiterbildung der erfindungsgemäßen Lösung ist vorgesehen, dass die Messvorrichtung eine optisch transparente Trennplatte aufweist, wobei die optische Erfassungsvorrichtung von der Trennplatte beabstandet angeordnet ist, wobei das verstellbare Bauteil in der zweiten Stellung wenigstens teilweise zwischen der optischen Erfassungsvorrichtung und der Trennplatte angeordnet ist.

Bei einer vorteilhaften Weiterbildung der erfindungsgemäßen Lösung ist vorgesehen, dass die optische Erfassungsvorrichtung einen NIR-Sensor aufweist.

Bei einer vorteilhaften Weiterbildung der erfindungsgemäßen Lösung ist vorgesehen, dass durch den Leitungsabschnitt ein Schmiermittel, insbesondere Öl, der landwirtschaftliche Erntemaschine förderbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung nähererläutert, wobei sich gleiche Bezugszeichen auf gleiche oder ähnliche oder funktional gleiche Komponenten beziehen

Es zeigen, jeweils schematisch,
- Fig. 1: eine landwirtschaftliche Erntemaschine mit einer Messvorrichtung zur Untersuchung eines durch die Erntemaschine geförderten Materialstromes, wobei die Messvorrichtung im ersten Betriebsmodus dargestellt ist,
- Fig. 2: die landwirtschaftliche Erntemaschine der Fig. 1, wobei die Messvorrichtung im ersten Betriebsmodus dargestellt ist,
- Fig. 3: eine weitere landwirtschaftliche Erntemaschine mit einer Messvorrichtung zur Untersuchung eines durch die Erntemaschine geförderten Materialstromes, wobei die Messvorrichtung im ersten Betriebsmodus dargestellt ist,
- Fig. 4: die landwirtschaftliche Erntemaschine der Fig. 3, wobei die Messvorrichtung im zweiten Betriebsmodus dargestellt ist.

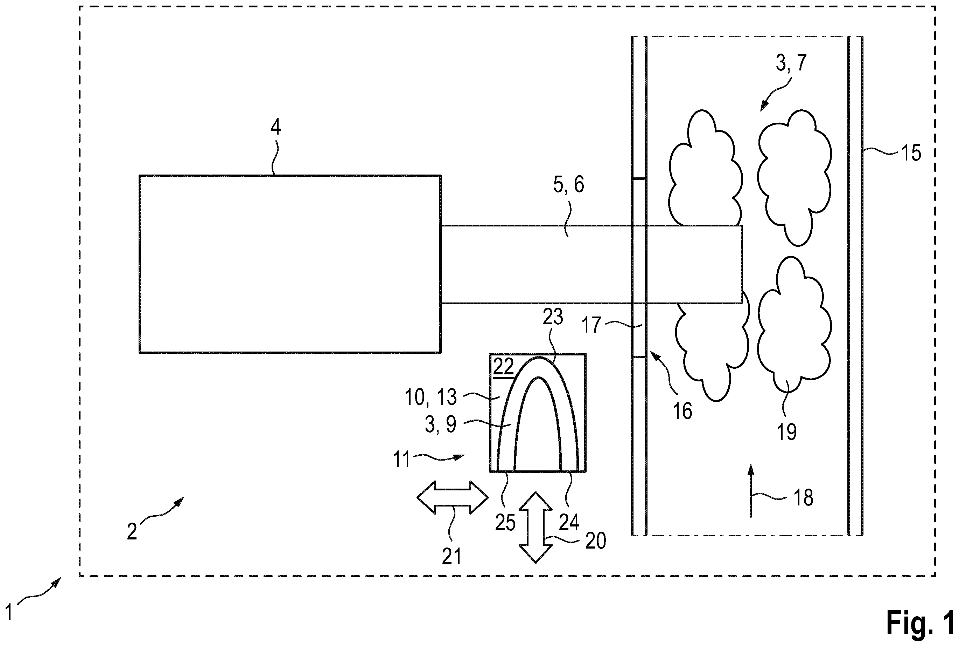

Fig. 1 zeigt symbolisch eine landwirtschaftliche Erntemaschine 1. Diese Erntemaschine 1 kann beispielweise als Mähdrescher, Feldhäcksler oder Ballenpresse ausgebildet sein. Ferner kann die Erntemaschine 1 ein selbstfahrender Mähdrescher oder ein selbstfahrender Feldhäcksler sein.

Eine solche landwirtschaftliche Erntemaschine 1 kann durch einen Erntegutbestand fahren, schneidet dabei Erntegut 19 und nimmt anschließend dieses geschnittenes Erntegut 19 auf, wobei dieses geschnittene Erntegut 19 einen Materialstrom 3 in Form eines Erntegutstroms 7 ausbildet, der innerhalb der Erntemaschine 1 entlang einer Strömungsrichtung 18 gefördert wird. Hierbei wird der Erntegutstrom 7 in einem Förderkanal 15 gefördert, der wenigstens eine Wandungsöffnung 16 aufweist, in der eine optisch transparente Trennplatte 17 angeordnet ist. Im Vergleich hierzu ist das Material des Förderkanals 15 nicht optisch transparent.

Die landwirtschaftliche Erntemaschine 1 umfasst eine Messvorrichtung 2, die zur Untersuchung des durch die Erntemaschine 1 geförderten Materialstromes 3 ausgebildet ist. Die landwirtschaftliche Erntemaschine 1 und/oder die Messvorrichtung 2 weisen wenigstens eine nicht dargestellte Lichtquelle auf. Mittels dieser Lichtquelle wird der geförderte Materialstrom 3 mit Licht, insbesondere mit breitbandigem bzw. weißem Licht, beaufschlagt.

Wird der geförderten Materialstromes 3 von der Lichtquelle beaufschlagt, wird auch ein Teil der Lichtstrahlung reflektiert, wobei das Spektrum des reflektierten Lichtes von den Eigenschaften des geförderten Materialstromes 3 abhängt. Hierfür weist die Messvorrichtung 2 eine optische Erfassungsvorrichtung 4 auf, die zur Erfassung eines vom geförderten Materialstrom 3 reflektierten Lichtes 5 ausgebildet ist. Hierfür kann die optische Erfassungsvorrichtung 4 beispielweise genau einen NIR-Sensor aufweisen. Die optische Erfassungsvorrichtung 4 ist von der Trennplatte 17 bezüglich einer Querrichtung 21 beabstandet angeordnet.

Neben dem Materialstrom 3 in Form eines Erntegutstroms 7 weist die landwirtschaftliche Erntemaschine 1 auch einen weiteren Materialstrom 3 in Form eines geförderten Betriebsflüssigkeitsstroms 9 auf. Hierbei kann beispielsweise ein Schmiermittel, insbesondere Öl, den Betriebsflüssigkeitsstrom 9 der landwirtschaftlichen Erntemaschine 1 ausbilden.

Die Messvorrichtung 2 weist wenigstens einen Leitungsabschnitt 13 auf, der vom geförderten Betriebsflüssigkeitsstrom 9 durchströmt wird, wobei der Leitungsabschnitt 13 optisch transparent ausgebildet ist.

Der Leitungsabschnitt 13 weist einen Leitungskörper 22 aus optisch transparenten Material auf, wobei im Leitungskörper 22 ein Durchströmkanal 23 für den geförderten Betriebsflüssigkeitsstrom 9 ausgebildet ist. Hierbei ist vorgesehen sein, dass der geförderte Betriebsflüssigkeitsstrom 9 durch eine Einlassöffnung 24 des Leitungskörpers 22 in den Durchströmkanal 23 des Leitungskörpers 22 einströmen kann, dann den Durchströmkanal 23 des Leitungskörpers 22 durchströmt und durch eine Auslassöffnung 25 des Leitungskörpers 22 aus dem Durchströmkanal 23 und dem Leitungskörper 22 ausströmt. Die Einlassöffnung 24 kann mit einer nicht dargestellten Einlassleitung für den geförderten Betriebsflüssigkeitsstrom 9 fluiddicht verbunden werden. Die Auslassöffnung 25 kann mit einer nicht dargestellten Auslassleitung für den geförderten Betriebsflüssigkeitsstrom 9 fluiddicht verbunden werden. Der Leitungskörper 22 ist quaderförmig ausgebildet, wobei die Einlassöffnung 24 und die Auslassöffnung 25 auf der gleichen Seitenfläche des Leitungskörper 22 angeordnet sind. Der Durchströmkanal 23 weist einen im Wesentlichen U-förmigen Verlauf auf.

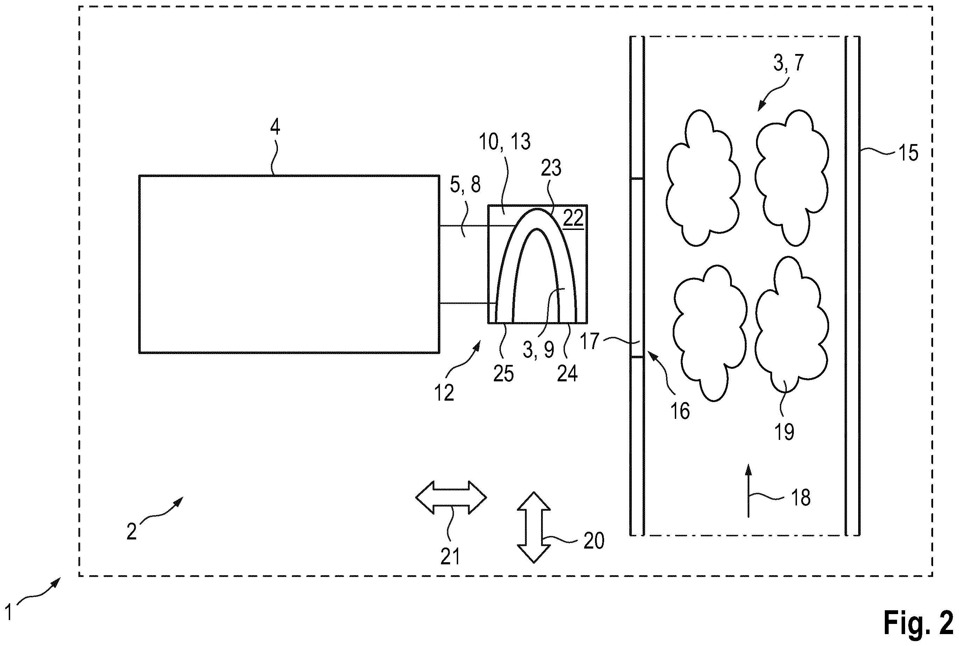

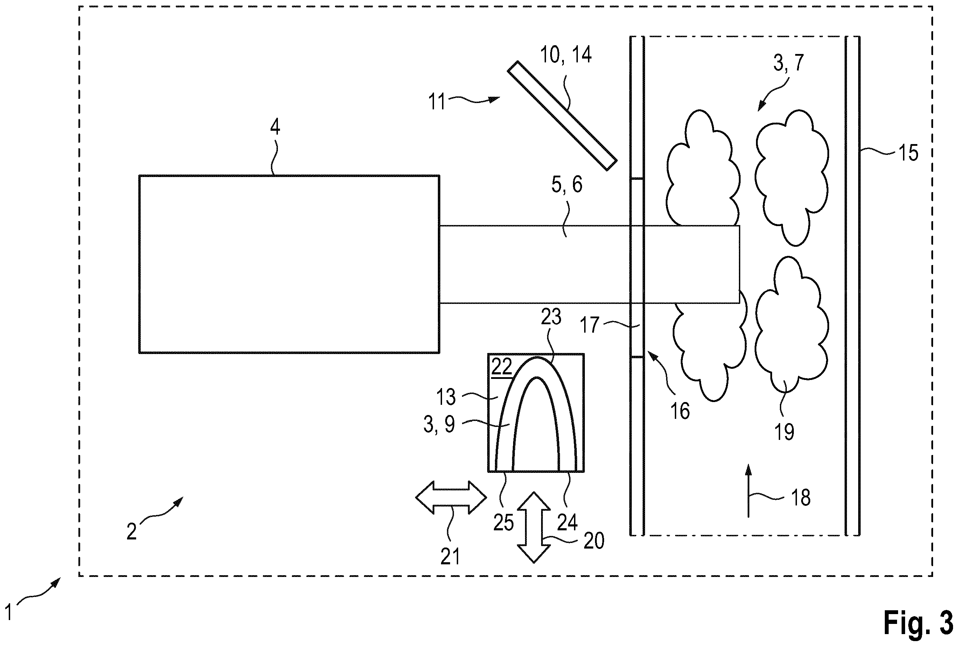

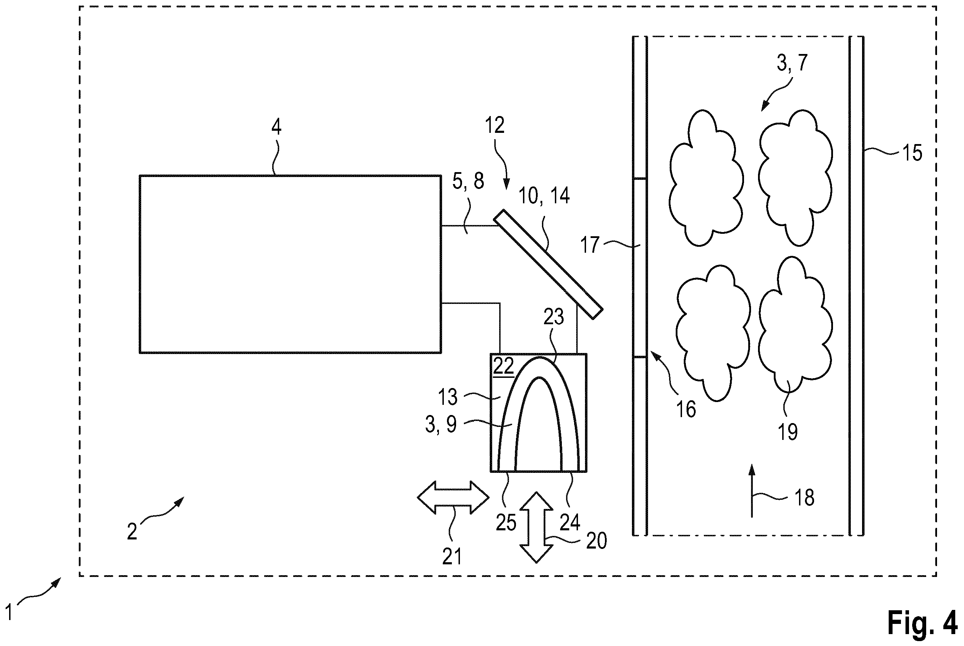

Die bisherige Figurenbeschreibung trifft auf die Fig. 1, Fig. 2, Fig. 3 und Fig. 4 zu. Im Folgenden werden die Unterschiede dieser Figuren beschrieben. Die Fig. 1 und Fig. 2 zeigen eine Messeinrichtung 2 in einem ersten Betriebsmodus und in einem zweiten Betriebsmodus. Die Fig. 3 und Fig. 4 zeigen eine weitere Messeinrichtung 2 in einem ersten Betriebsmodus und in einem zweiten Betriebsmodus.

In den Fig. 1 und Fig. 2 bildet der Leitungsabschnitt 13 ein verstellbares Bauteil 10 aus. In der Fig. 1 ist die Messeinrichtung 2 in einem ersten Betriebsmodus dargestellt, in dem die optische Erfassungsvorrichtung 4 Licht 6 erfasst, welches vom durch die Erntemaschine 1 geförderten Erntegutstrom 7 reflektiert wurde. In der Fig. 2 ist die Messeinrichtung 2 in einem zweiten Betriebsmodus dargestellt, in dem die optische Erfassungsvorrichtung 4 Licht 8 erfasst, welches vom durch die Erntemaschine 1 geförderten Betriebsflüssigkeitsstrom 9 reflektiert wurde. Hierfür wurde das verstellbare Bauteil 10 bzw. der Leitungsabschnitt 13 bezüglich einer Verschieberichtung 20 verschoben. In der Fig. 1 ist das verstellbare Bauteil 10 bzw. der Leitungsabschnitt 13 im ersten Betriebsmodus der Messvorrichtung 2 in einer ersten Stellung 11 angeordnet ist, sodass die optische Erfassungsvorrichtung 4 vom geförderten Erntegutstrom 7 reflektiertes Licht 6 erfasst. In der Fig. 2 ist das verstellbare Bauteil 10 bzw. der Leitungsabschnitt 13 im zweiten Betriebsmodus der Messvorrichtung 2 in einer zweiten Stellung 12 angeordnet, sodass die optische Erfassungsvorrichtung 4 vom geförderten Betriebsflüssigkeitsstrom 9 reflektiertes Licht 8 erfasst.

In den Fig. 3 und Fig. 4 bildet eine Spiegeleinheit 14 ein verstellbares Bauteil 10 aus. In der Fig. 3 ist die Messeinrichtung 2 in einem ersten Betriebsmodus dargestellt, in dem die optische Erfassungsvorrichtung 4 Licht 6 erfasst, welches vom durch die Erntemaschine 1 geförderten Erntegutstrom 7 reflektiert wurde. In der Fig. 4 ist die Messeinrichtung 2 in einem zweiten Betriebsmodus dargestellt, in dem die optische Erfassungsvorrichtung 4 Licht 8 erfasst, welches vom durch die Erntemaschine 1 geförderten Betriebsflüssigkeitsstrom 9 reflektiert wurde. Hierfür wurde das verstellbare Bauteil 10 bzw. die Spiegeleinheit 14 bezüglich einer Verschieberichtung 20 verschoben. In der Fig. 3 ist das verstellbare Bauteil 10 bzw. die Spiegeleinheit 14 im ersten Betriebsmodus der Messvorrichtung 2 in einer ersten Stellung 11 angeordnet, sodass die optische Erfassungsvorrichtung 4 vom geförderten Erntegutstrom 7 reflektiertes Licht 6 erfasst. In der Fig. 2 ist das verstellbare Bauteil 10 bzw. die Spiegeleinheit 14 im zweiten Betriebsmodus der Messvorrichtung 2 in einer zweiten Stellung 12 angeordnet, sodass die optische Erfassungsvorrichtung 4 vom geförderten Betriebsflüssigkeitsstrom 9 reflektiertes Licht 8 erfasst. In dieser Position wird das geförderten Betriebsflüssigkeitsstrom 9 reflektierte Licht 8 über das das verstellbare Bauteil 10 bzw. die Spiegeleinheit 14 zur optische Erfassungsvorrichtung 4 gespiegelt.

### Bezugszeichenliste

- 1: Landwirtschaftliche Erntemaschine
- 2: Messvorrichtung
- 3: Materialstrom
- 4: Erfassungsvorrichtung
- 5: reflektiertes Licht
- 6: reflektiertes Licht vom Erntegutstrom
- 7: Erntegutstrom
- 8: reflektiertes Licht vom Betriebsflüssigkeitsstrom
- 9: Betriebsflüssigkeitsstrom
- 10: verstellbares Bauteil
- 11: erste Stellung
- 12: zweite Stellung
- 13: Leitungsabschnitt
- 14: Spiegeleinheit
- 15: Förderkanal
- 16: Wandungsöffnung
- 17: Trennplatte
- 18: Strömungsrichtung des Erntegutstroms
- 19: Erntegut
- 20: Verschieberichtung
- 21: Querrichtung
- 22: Leitungskörper
- 23: Durchströmkanal
- 24: Einlassöffnung
- 25: Auslassöffnung

## Patentansprüche

1. Messvorrichtung (2) für eine landwirtschaftliche Erntemaschine (1),
- wobei die Messvorrichtung (2) zur Untersuchung eines durch die Erntemaschine (1) geförderten Materialstromes (3) ausgebildet ist,
- wobei die Messvorrichtung (2) eine optische Erfassungsvorrichtung (4) aufweist, die zur Erfassung eines vom geförderten Materialstrom (3) reflektierten Lichtes (5) ausgebildet ist,
- wobei die Messeinrichtung (2) einen ersten Betriebsmodus aufweist, in dem die optische Erfassungsvorrichtung (4) Licht (5, 6) erfassen kann, welches von einem durch die Erntemaschine (1) geförderten Erntegutstroms (3, 7) reflektiert wurde,
**dadurch gekennzeichnet,**
**dass** die Messeinrichtung (2) einen zweiten Betriebsmodus aufweist, in dem die optische Erfassungsvorrichtung (4) Licht (5, 8) erfassen kann, welches von einem durch die Erntemaschine (1) geförderten Betriebsflüssigkeitsstrom (3, 9) reflektiert wurde.

2. Messvorrichtung (2) nach Anspruch 1,
**dadurch gekennzeichnet,**
- **dass** die Messvorrichtung (2) wenigstens ein verstellbares Bauteil (10) aufweist,
- wobei das verstellbare Bauteil (10) zwischen einer ersten Stellung (11) und einer zweiten Stellung (12) verstellbar ist,
- wobei das verstellbare Bauteil (10) im ersten Betriebsmodus der Messvorrichtung (2) in der ersten Stellung (11) angeordnet ist, sodass die optische Erfassungsvorrichtung (4) vom geförderten Erntegutstrom (3, 7) reflektiertes Licht (5, 6) erfassen kann,
- wobei das verstellbare Bauteil (10) im zweiten Betriebsmodus der Messvorrichtung (2) in der zweiten Stellung (12) angeordnet ist, sodass die optische Erfassungsvorrichtung (4) vom geförderten Betriebsflüssigkeitsstrom (3, 9) reflektiertes Licht (5, 8) erfassen kann.

3. Messvorrichtung (2) nach Anspruch 2,
**dadurch gekennzeichnet,**
- **dass** das verstellbare Bauteil (10) einen optisch transparenten Leitungsabschnitt (13) für die landwirtschaftliche Erntemaschine (1) ausbildet,
- wobei ein Betriebsflüssigkeitsstrom (3, 9) der landwirtschaftlichen Erntemaschine (1) durch den Leitungsabschnitt (13) förderbar ist.

4. Messvorrichtung (2) nach Ansprüchen 2 oder 3,
**dadurch gekennzeichnet,**
- **dass** die Messvorrichtung (2) eine optisch transparente Trennplatte (17) aufweist,
- wobei die optische Erfassungsvorrichtung (4) von der Trennplatte (17) beabstandet angeordnet ist,
- wobei das verstellbare Bauteil (10) in der zweiten Stellung (12) wenigstens teilweise zwischen der optischen Erfassungsvorrichtung (4) und der Trennplatte (17) angeordnet ist.

5. Messvorrichtung (2) nach einem der Ansprüche 1 bis 4,
**dadurch gekennzeichnet,**
**dass** die optische Erfassungsvorrichtung (4) einen NIR-Sensor aufweist.

6. Messvorrichtung (2) nach einem der Ansprüche 3 bis 5,
**dadurch gekennzeichnet,**
**dass** durch den Leitungsabschnitt (13) ein Schmiermittel, insbesondere Öl, der landwirtschaftliche Erntemaschine (1) förderbar ist.

7. Landwirtschaftliche Erntemaschine (1), eine Messvorrichtung nach Anspruch 1 umfassend.

8. Landwirtschaftliche Erntemaschine (1) nach Anspruch 7,
**dadurch gekennzeichnet,**
- **dass** die Messvorrichtung (2) wenigstens ein verstellbares Bauteil (10) aufweist,
- wobei das verstellbare Bauteil (10) zwischen einer ersten Stellung (11) und einer zweiten Stellung (12) verstellbar ist,
- wobei das verstellbare Bauteil (10) im ersten Betriebsmodus der Messvorrichtung (2) in der ersten Stellung (11) angeordnet ist, sodass die optische Erfassungsvorrichtung (4) vom geförderten Erntegutstrom (3, 7) reflektiertes Licht (5, 6) erfasst,
- wobei das verstellbare Bauteil (10) im zweiten Betriebsmodus der Messvorrichtung (2) in der zweiten Stellung (12) angeordnet ist, sodass die optische Erfassungsvorrichtung (4) vom geförderten Betriebsflüssigkeitsstrom (3, 9) reflektiertes Licht (5, 8) erfasst.

9. Landwirtschaftliche Erntemaschine (1) nach Anspruch 7 oder 8,
**dadurch gekennzeichnet,**
- **dass** die Messvorrichtung (2) wenigstens einen Leitungsabschnitt (13) aufweist,
- wobei der Leitungsabschnitt (13) vom geförderten Betriebsflüssigkeitsstrom (3, 9) durchströmt wird,
- wobei der Leitungsabschnitt (13) optisch transparent ausgebildet ist.

10. Landwirtschaftliche Erntemaschine (1) nach Anspruch 9,
**dadurch gekennzeichnet,**
- **dass** der Leitungsabschnitt (13) das verstellbare Bauteil (10) ausbildet, oder
- **dass** eine Spiegeleinheit (14) das verstellbare Bauteil (10) ausbildet.

11. Landwirtschaftliche Erntemaschine (1) nach einem der Ansprüche 8 bis 10,
**dadurch gekennzeichnet,**
- **dass** die Erntemaschine (1) einen Förderkanal (15) zur Förderung des Erntegutstromes (7) aufweist,
- wobei der Förderkanal (15) wenigstens eine Wandungsöffnung (16) aufweist, in der eine optisch transparente Trennplatte (17) angeordnet ist,
- wobei die optische Erfassungsvorrichtung (4) von der Trennplatte (17) beabstandet angeordnet ist,
- wobei das verstellbare Bauteil (10) in der zweiten Stellung (12) wenigstens teilweise zwischen der optischen Erfassungsvorrichtung (4) und der Trennplatte (17) angeordnet ist.

12. Landwirtschaftliche Erntemaschine (1) nach einem der Ansprüche 7 bis 11,
**dadurch gekennzeichnet,**
**dass** ein Schmiermittel, insbesondere Öl, den Betriebsflüssigkeitsstrom (9) der landwirtschaftlichen Erntemaschine (1) ausbildet.

13. Landwirtschaftliche Erntemaschine (1) nach einem der Ansprüche 7 bis 12,
**dadurch gekennzeichnet,**
**dass** die optische Erfassungsvorrichtung (4) einen NIR-Sensor aufweist.

14. Landwirtschaftliche Erntemaschine (1) nach einem der Ansprüche 7 bis 13,
**dadurch gekennzeichnet,**
**dass** die Erntemaschine (1) ein Mähdrescher, ein Feldhäcksler oder eine Ballenpresse ist.

## Claims

1. Measuring device (2) for an agricultural harvesting machine (1),
- wherein the measuring device (2) is designed for investigating a flow of material (3) conveyed through the harvesting machine (1),
- wherein the measuring device (2) has an optical detecting device (4), which is designed for detecting a light (5) reflected by the conveyed flow of material (3),
- wherein the measuring device (2) has a first operating mode, in which the optical detecting device (4) can detect light (5, 6) which has been reflected by a flow of a crop (3, 7) conveyed through the harvesting machine (1),
**characterized**
**in that** the measuring device (2) has a second operating mode, in which the optical detecting device (4) can detect light (5, 8) which has been reflected by a flow of an operating fluid (3, 9) conveyed through the harvesting machine (1).

2. Measuring device (2) according to Claim 1,
**characterized**
- **in that** the measuring device (2) has at least one adjustable component (10),
- wherein the adjustable component (10) is adjustable between a first position (11) and a second position (12),
- wherein, in the first operating mode of the measuring device (2), the adjustable component (10) is arranged in the first position (11), so that the optical detecting device (4) can detect light (5, 6) reflected by the conveyed flow of a crop (3, 7),
- wherein, in the second operating mode of the measuring device (2), the adjustable component (10) is arranged in the second position (12), so that the optical detecting device (4) can detect light (5, 8) reflected by the conveyed flow of an operating fluid (3, 9).

3. Measuring device (2) according to Claim 2,
**characterized**
- **in that** the adjustable component (10) forms an optically transparent section of line (13) for the agricultural harvesting machine (1),
- wherein a flow of an operating fluid (3, 9) of the agricultural harvesting machine (1) can be conveyed through the section of line (13).

4. Measuring device (2) according to Claims 2 and 3,
**characterized**
- **in that** the measuring device (2) has an optically transparent separating plate (17),
- wherein the optical detecting device (4) is arranged at a distance from the separating plate (17),
- wherein, in the second position (12), the adjustable component (10) is arranged at least partially between the optical detecting device (4) and the separating plate (17).

5. Measuring device (2) according to one of Claims 1 to 4,
**characterized**
**in that** the optical detecting device (4) has an NIR sensor.

6. Measuring device (2) according to one of Claims 3 to 5,
**characterized**
**in that** a lubricant, in particular oil, of the agricultural harvesting machine (1) can be conveyed through the section of line (13).

7. Agricultural harvesting machine (1), comprising a measuring device according to Claim 1.

8. Agricultural harvesting machine (1) according to Claim 7,
**characterized**
- **in that** the measuring device (2) has at least one adjustable component (10),
- wherein the adjustable component (10) is adjustable between a first position (11) and a second position (12),
- wherein, in the first operating mode of the measuring device (2), the adjustable component (10) is arranged in the first position (11), so that the optical detecting device (4) detects light (5, 6) reflected by the conveyed flow of a crop (3, 7),
- wherein, in the second operating mode of the measuring device (2), the adjustable component (10) is arranged in the second position (12), so that the optical detecting device (4) detects light (5, 8) reflected by the conveyed flow of an operating fluid (3, 9).

9. Agricultural harvesting machine (1) according to Claim 7 or 8,
**characterized**
- **in that** the measuring device (2) has at least one section of line (13),
- wherein the section of line (13) is flowed through by the conveyed flow of an operating fluid (3, 9),
- wherein the section of line (13) is of an optically transparent design.

10. Agricultural harvesting machine (1) according to Claim 9,
**characterized**
- **in that** the section of line (13) forms the adjustable component (10), or
- **in that** a mirror unit (14) forms the adjustable component (10).

11. Agricultural harvesting machine (1) according to one of Claims 8 to 10,
**characterized**
- **in that** the harvesting machine (1) has a conveying channel (15) for conveying the flow of a crop (7),
- wherein the conveying channel (15) has at least one wall opening (16), in which an optically transparent separating plate (17) is arranged,
- wherein the optical detecting device (4) is arranged at a distance from the separating plate (17),
- wherein, in the second position (12), the adjustable component (10) is arranged at least partially between the optical detecting device (4) and the separating plate (17).

12. Agricultural harvesting machine (1) according to one of Claims 7 to 11,
**characterized**
**in that** a lubricant, in particular oil, forms the flow of an operating fluid (9) of the agricultural harvesting machine (1).

13. Agricultural harvesting machine (1) according to one of Claims 7 to 12,
**characterized**
**in that** the optical detecting device (4) has an NIR sensor.

14. Agricultural harvesting machine (1) according to one of Claims 7 to 13,
**characterized**
**in that** the harvesting machine (1) is a combine harvester, a forage harvester or a baler.

## Revendications

1. Dispositif de mesure (2) pour une moissonneuse (1) agricole,
- le dispositif de mesure (2) étant formé pour examiner un flux de matériau (3) transporté par la moissonneuse (1),
- le dispositif de mesure (2) comportant un dispositif de détection optique (4), qui est formé pour détecter une lumière (5) réfléchie par le flux de matériau (3) transporté,
- le dispositif de mesure (2) comportant un premier mode de fonctionnement, dans lequel le dispositif de détection optique (4) peut détecter de la lumière (5, 6), qui a été réfléchie par un flux de produit de récolte (3, 7) transporté par la moissonneuse (1),
**caractérisé en ce**
**que** le dispositif de mesure (2) comporte un deuxième mode de fonctionnement, dans lequel le dispositif de détection optique (4) peut détecter de la lumière (5, 8), qui a été réfléchie par un flux de liquide de service (3, 9) transporté par la moissonneuse (1).

2. Dispositif de mesure (2) selon la revendication 1, **caractérisé en ce**
- **que** le dispositif de mesure (2) comporte au moins un composant (10) pouvant être ajusté,
- le composant (10) ajustable pouvant être ajusté entre une première position (11) et une deuxième position (12),
- le composant (10) ajustable étant disposé dans la première position (11) dans le premier mode de fonctionnement du dispositif de mesure (2), si bien que le dispositif de détection optique (4) peut détecter la lumière (5, 6) réfléchie par le flux de produit de récolte (3, 7) transporté,
- le composant (10) ajustable étant disposé dans la deuxième position (12) dans le deuxième mode de fonctionnement du dispositif de mesure (2), si bien que le dispositif de détection optique (4) peut détecter la lumière (5, 8) réfléchie par le flux de liquide de fonctionnement (3, 9) transporté.

3. Dispositif de mesure (2) selon la revendication 2, **caractérisé en ce**
- **que** le composant (10) ajustable forme une section de conduite (13) optiquement transparente pour la moissonneuse (1) agricole,
- un flux de liquide de fonctionnement (3, 9) de la moissonneuse (1) agricole pouvant être transporté à travers la section de conduite (13).

4. Dispositif de mesure (2) selon les revendications 2 ou 3,
**caractérisé en ce**
- **que** le dispositif de mesure (2) comporte une plaque de séparation (17) optiquement transparente,
- le dispositif de détection optique (4) étant disposé à distance de la plaque de séparation (17),
- le composant (10) ajustable étant disposé dans la deuxième position (12) au moins en partie entre le dispositif de détection optique (4) et la plaque de séparation (17).

5. Dispositif de mesure (2) selon l'une des revendications 1 à 4,
**caractérisé en ce**
**que** le dispositif de détection optique (4) comporte un capteur NIR.

6. Dispositif de mesure (2) selon l'une des revendications 3 à 5,
**caractérisé en ce**
**qu'**un lubrifiant, en particulier de l'huile, peut être transporté à la moissonneuse (1) agricole par la section de conduite (13).

7. Moissonneuse (1) agricole comprenant un dispositif de mesure selon la revendication 1.

8. Moissonneuse (1) agricole selon la revendication 7, **caractérisée en ce**
- **que** le dispositif de mesure (2) comporte au moins un composant (10) pouvant être ajusté,
- le composant (10) ajustable pouvant être ajusté entre une première position (11) et une deuxième position (12),
- le composant (10) ajustable étant disposé dans la première position (11) dans le premier mode de fonctionnement du dispositif de mesure (2), si bien que le dispositif de détection optique (4) détecte la lumière (5, 6) réfléchie par le flux de produit de récolte (3, 7) transporté,
- le composant (10) ajustable étant disposé dans la deuxième position (12) dans le deuxième mode de fonctionnement du dispositif de mesure (2), si bien que le dispositif de détection optique (4) détecte la lumière (5, 8) réfléchie par le flux de liquide de fonctionnement (3, 9) transporté.

9. Moissonneuse (1) agricole selon les revendications 7 ou 8,
**caractérisée en ce**
- **que** le dispositif de mesure (2) comporte au moins une section de conduite (13),
- la section de conduite (13) étant traversée par le flux de liquide de fonctionnement (3, 9) transporté,
- la section de conduite (13) étant optiquement transparente.

10. Moissonneuse (1) agricole selon la revendication 9, **caractérisée en ce**
- **que** la section de conduite (13) forme le composant (10) ajustable, ou
- **qu'**une unité de miroir (14) forme le composant (10) ajustable.

11. Moissonneuse (1) agricole selon l'une des revendications 8 à 10,
**caractérisée en ce**
- **que** la moissonneuse (1) comporte un canal de transport (15) pour le transport du flux de produit de récolte (7),
- le canal de transport (15) comportant au moins une ouverture de paroi (16), dans laquelle une plaque de séparation (17) optiquement transparente est disposée,
- le dispositif de détection optique (4) étant disposé à distance de la plaque de séparation (17),
- le composant (10) ajustable étant disposé dans la deuxième position (12) au moins en partie entre le dispositif de détection optique (4) et la plaque de séparation (17).

12. Moissonneuse (1) agricole selon l'une des revendications 7 à 11,
**caractérisée en ce**
**qu'**un lubrifiant, en particulier de l'huile, forme le flux de liquide de fonctionnement (9) de la moissonneuse (1) agricole.

13. Moissonneuse (1) agricole selon l'une des revendications 7 à 12,
**caractérisée en ce**
**que** le dispositif de détection optique (4) comporte un capteur NIR.

14. Moissonneuse (1) agricole selon l'une des revendications 7 à 13,
**caractérisée en ce**
**que** la moissonneuse (1) est une moissonneuse-batteuse, une ensileuse ou une presse à balles.
